# EUROPÄISCHE PATENTANMELDUNG

(11) **EP 3 744 172 A1**
(43) Veröffentlichungstag der Anmeldung: **02.12.2020**
(21) Anmeldenummer: 19176767.2
(22) Anmeldetag: 27.05.2019
(51) Int. Cl.: A01K 1/01, A01K 23/00

(54) **VORRICHTUNG ZUR AUFNAHME VON EXKREMENTEN IN EINEM BEHÄLTER**

(71) Anmelder: Ruijterkamp, Machiel, 6415 Arth (CH); Verschuure, Arjen, 2133 CZ Hoofddorp (NL)
(72) Erfinder: Ruijterkamp, Machiel, 6415 Arth (CH); Verschuure, Arjen, 2133 CZ Hoofddorp (NL)
(74) Vertreter: Rutz, Andrea

(57) **Zusammenfassung**

Es wird ein Behälter (1) zur Aufnahme und Beseitigung von Exkrementen angegeben. Der Behälter (1) weist eine beutelförmig ausgebildete Behälterwandung (2) mit einem Boden (3) und einem diesem gegenüberliegenden, eine Aufnahmeöffnung (5) des Behälters (1) bildenden Rand (4) auf. Ein am Rand (4) vorgesehenes, elastisches Element (6) dient zum Aufspannen der Aufnahmeöffnung (5) und zum Aussteifen des Rands (4). Der Behälter weist zudem eine Einrichtung (9) zum Schliessen der Aufnahmeöffnung (5) auf, wobei der Rand (4) durch Ziehen am elastischen Element (6) zuziehbar ist. Des Weiteren wird eine Bevorratungseinrichtung (14) zum Aufnehmen, Vorhalten und Bereitstellen eines derartigen Behälters (1), eine Vorrichtung (27) mit einer solchen Bevorratungseinrichtung (14) zur Aufnahme und Handhabung von Exkrementen sowie eine Roll-Hundeleine mit einer derartigen Vorrichtung (27) angegeben.

## Beschreibung

### TECHNISCHES GEBIET

Die vorliegende Erfindung betrifft einen Behälter, insbesondere einen Beutel oder eine Tüte, für Exkremente, eine Bevorratungseinrichtung zur automatischen Bereitstellung von zumindest einem derartigen Behälter, sowie eine Vorrichtung zur Aufnahme und Handhabung von Exkrementen in einem Behälter aus der Bevorratungseinrichtung.

Exkremente im Sinne der vorliegenden Erfindung sind tierische Produkte der Defäkation aus dem Magen-Darm-Trakt, insbesondere Hundekot. Mit der vorliegenden Erfindung können aber auch andere Produkte, z.B. kleinere Abfälle, die für die Handhabung mit dem erfindungsgemässen Behälter geeignet sind, aufgenommen werden.

### STAND DER TECHNIK

Hundehalter sind in der Regel verpflichtet, die Hinterlassenschaften ihres Hundes selbst zu beseitigen. Die Beseitigung erfolgt vorwiegend erst nachdem der Hund sein Geschäft direkt auf den Boden verrichtet hat, indem der Kot vom Boden wieder aufgehoben und in einen selbst mitgeführten oder zu diesem Zweck öffentlich bereitgestellten Hundekotbeutel befördert wird. Dies erfolgt z.B. mittels einer ebenfalls selbst mitgebrachten Schaufel oder indem der Hundekotbeutel wie ein Handschuh übergezogen, der Kot damit ergriffen und anschliessend der Beutel umgestülpt wird.

Diese Art der Kotbeseitigung wird von vielen als unangenehm und peinlich empfunden.

Zudem erfordert das Aufheben des Kots per Hand ein Hinunterbücken zum Boden, was insbesondere bei schlechtem Gesundheitszustand der aufsammelnden Person oder beim Mitführen von Taschen oder Gepäckstücken umständlich und mühsam sein kann. Des Weiteren sind beide Hände notwendig, um den Kot in den Beutel zu befördern und den Beutel zu verschliessen. Nachteilig ist hierbei insbesondere, dass ein Hundebesitzer während des gebückten Kotaufsammelns nicht gleichzeitig den Hund im Auge behalten und/oder die Hundeleine unter Kontrolle haben kann.

Es sind bereits Vorrichtungen bekannt, die sich mit dieser Problematik beschäftigen.

Aus der DE 10 2017 005 058 A1 ist ein Handgerät zur Aufnahme und zum Transport von Hundekot bekannt. Das Handgerät weist ein teleskopierbares Rohrsystem auf, an dessen unterem Ende ein Greifersystem vorgesehen ist. Das Greifersystem steht mit einem Seilzugmechanismus in Verbindung. Durch Ziehen an dem Seilzug ergreifen die Greifer die am Boden liegenden Exkremente und heben diese nach oben in das Rohrsystem. Bei dieser Lösung müssen die Exkremente gesondert in einem WC entsorgt werden und die Vorrichtung muss anschliessend gereinigt werden. Auch kann mit dieser Vorrichtung lediglich ein Kothaufen aufgenommen werden.

Die DE 10 2012 103 071 A1 offenbart einen Hunde-Exkremente-Sammler, der aus einem Stab mit Griff und Spitze gebildet ist. Der Körper des Stabes besteht aus zwei Röhren, die zwei teleskopartig zusammenhängende Abschnitte bilden, und weist etwas oberhalb der Spitze einen Ring auf, der horizontal ausgerichtet ist, wenn der Stab in der ausgefahrenen Position ist, um die Exkremente des Hundes im Moment des Defäkierens des Tieres aufzunehmen. Rund um den Ring herum ist mit Hilfe eines Gummibands die Öffnung einer Plastiktüte angebracht. Das Gummiband wird auch verwendet, um die Tüte zu schliessen, sobald der Aufnahmevorgang beendet ist. Der Exkremente-Sammler ist des Weiteren mit einem röhrenförmigen Behälter für Plastiktüten versehen, der an dem Griff des Stabes über ein Gewinde oder durch ein Drucksystem angebracht ist, und der eine Öffnung hat, durch die man die Tüten nach Art einer Tücherbox je nach Bedarf entnehmen kann. Zwar ist bei dieser Vorrichtung das Aufnehmen des Kots erleichtert, indem man den Hund sein Geschäft direkt in die Tüte verrichten lässt. Jedoch ist es notwendig die Tüte zuvor per Hand in den Ring einzulegen und zu befestigen. Auch muss die Tüte per Hand von der Vorrichtung entfernt und verschlossen werden. Hierzu sind wiederum beide Hände erforderlich, was zu vorstehend genannten Problemen führen kann.

Die WO 2013/114354 A1 offenbart eine Vorrichtung zur Aufnahme von Hundekot, die in eine Rollleinenbox integriert ist. Die Vorrichtung weist eine an einem Teleskopstab vorgesehene Greifer-Einrichtung auf, die elektrisch betrieben aus der Leinenbox heraus- und in diese hinein fahrbar ist. Ebenfalls elektrisch betrieben öffnen und schliessen sich die Greiferschaufeln, um am Boden liegende Exkremente zu umgreifen und aufzunehmen. Bei dieser Vorrichtung müssen die Exkremente extra in einem WC entsorgt werden und die Greifer müssen anschliessend gereinigt werden. Um den Reinigungsaufwand der Schaufeln zu verringern, kann auf der Innenseite der Greiferschaufeln eine Folie oder Tüte befestigt sein. In diesem Fall muss die Folie oder Tüte jedoch per Hand vor der Aufnahme der Exkremente gesondert angebracht und hinterher wieder entfernt und ebenfalls entsorgt werden.

### DARSTELLUNG DER ERFINDUNG

Ausgehend von dem vorgenannten Stand der Technik liegt der Erfindung daher die Aufgabe zugrunde, eine Vorrichtung zur Aufnahme von Exkrementen bereitzustellen, die möglichst einfach, insbesondere mit einer Hand und ohne sich bücken zu müssen, bedienbar ist. Die Vorrichtung soll es insbesondere ermöglichen, Exkremente aufzunehmen, zu transportieren und zu beseitigen, ohne einen Aufnahmebehälter für die Exkremente mit den Händen berühren zu müssen. Weitere Aufgabe ist es, hierfür einen entsprechenden Aufnahmebehälter und eine Bevorratungseinrichtung bereitzustellen.

Diese Aufgaben werden durch einen Behälter mit den Merkmalen von Anspruch 1, eine Bevorratungseinrichtung mit den Merkmalen von Anspruch 6 und eine Vorrichtung mit den Merkmalen von Anspruch 11 gelöst.

Demnach weist der erfindungsgemässe Behälter zur Aufnahme und Beseitigung von Exkrementen eine beutelförmig ausgebildete Behälterwandung mit einem Boden und einem diesem gegenüberliegenden, eine Aufnahmeöffnung des Behälters bildenden Rand auf, sowie ein am Rand vorgesehenes, elastisches Element zum Aufspannen der Aufnahmeöffnung und zum Aussteifen des Rands, und eine Einrichtung zum Schliessen der Aufnahmeöffnung, wobei der Rand durch Ziehen am elastischen Element zuziehbar ist.

Vorzugsweise handelt es sich bei dem Behälter um einen Beutel, ein Säckchen oder eine Tüte oder dergleichen Behältnis mit einem bevorzugt runden oder rechteckigen, insbesondere quadratischen, Querschnitt. Der Behälter ist so dimensioniert, dass Exkremente, insbesondere von Hunden, einfach und sicher aufnehmbar sind.

Vorzugsweise weist der Behälter bzw. die Behälterwandung ein wasserdichtes Material auf oder die Behälterwandung ist an ihrer Innenfläche und/oder Aussenfläche mit einem wasserdichten Material beschichtet. Besonders bevorzugt besteht die Behälterwandung aus einer Kunststofffolie, z.B. aus Polyethylen oder Polypropylen. Vorteilhaft ist die Behälterwandung grösstenteils, das heisst zu mehr als 50 Gew.-%, bevorzugt zu mehr als 70 Gew.-%, noch bevorzugter zu mehr als 90 Gew.-% oder gar zu 100 Gew.-%, aus nachwachsenden Rohstoffen hergestellt und/oder biologisch abbaubar.

Die Raumform des elastischen Elements entspricht zweckmässigerweise der Raumform des Behälterquerschnitts. Vorzugsweise ist das elastische Element ein elastischer Ring oder ein elastisches Element mit einer insgesamt rechteckigen Form. Das elastische Element kann aber auch beliebige andere Formen aufweisen, wie zum Beispiel eine ovale Form oder eine polygonale, insbesondere sechseckige Form.

Vorzugsweise weist das elastische Element einen Durchmesser auf, der geringfügig kleiner oder grösser ist, als der Durchmesser des Behälters bzw. des Rands des Behälters. Dasselbe gilt im Falle eines rechteckigen Elements für Länge und Breite. Dementsprechend ist das elastische Element innerhalb oder ausserhalb in Bezug zur Behälterwandung angeordnet.

Das elastische Element ist vorzugsweise ein Kunststoffformteil, wobei das Material so gewählt ist, dass das elastische Element verformbar, z.B. faltbar oder verdrehbar ist, aber gleichzeitig das Bestreben hat seine ursprüngliche Raumform wieder anzunehmen, also aus der gefalteten Form wieder in eine z.B. Ringform zurückzuspringen. Das Elastische Element kann aber auch aus einem beliebigen anderen Material, wie insbesondere einem Metall, hergestellt sein. Vorteilhaft ist das elastische Element grösstenteils, das heisst zu mehr als 50 Gew.-%, bevorzugt zu mehr als 70 Gew.-%, noch bevorzugter zu mehr als 90 Gew.-% oder gar zu 100 Gew.-%, aus nachwachsenden Rohstoffen hergestellt und/oder biologisch abbaubar.

Vorzugsweise ist das elastische Element in die Form einer verdreht gefalteten Acht bringbar.

Vorzugsweise ist das elastische Element entlang des Rands angeordnet und mit diesem verbunden, so dass das elastische Element in radiale Richtung relativ zum Rand frei beweglich ist, senkrecht hierzu, also in axialer Richtung des Behälters, aber im Wesentlichen begrenzt oder fixiert ist. In einer bevorzugten Ausführung ist der Rand um das elastische Element umgeschlagen und an der Behälterwandung befestigt, z.B. angeklebt, so dass sich ein Kanal bildet, in dem das elastische Element radial frei verschieblich angeordnet ist. Das elastische Element kann auch mittels Schlaufen oder Ösen befestigt sein.

Aufgrund der Beschaffenheit und Anordnung des elastischen Elements ist die Aufnahmeöffnung des Behälters automatisch aufgespannt. Zudem ist der Behälter im Randbereich ausgesteift bzw. selbsttragend, so dass der Rand bei der Verwendung des Behälters nicht wegklappt. Dadurch lassen sich Exkremente sowohl vom Boden auflesen als auch direkt bei Verrichtung des Geschäfts auffangen noch bevor diese den Boden berühren. Des Weiteren ist das elastische Element faltbar, d.h. es kann zur Bevorratung zusammengefaltet oder verdreht oder übereinandergeschlagen werden, so dass der Platzbedarf verringert wird. In diesem Fall springt das elastische Element bei der Entnahme wieder auf und spannt wie erläutert den Behälter auf.

Gemäss einer bevorzugten Ausführung weist die Einrichtung zum Schliessen der Aufnahmeöffnung ein am elastischen Element angebundenes Halteelement, und ein am Halteelement vorgesehenes Arretierungselement auf, wobei an das Halteelement eine in radialer Richtung vom elastischen Element wegweisende Zugkraft derart anlegbar ist, dass das elastische Element durch Ziehen am Halteelement relativ zum Arretierungselement aus dem Rand herausziehbar und dabei vom Arretierungselement arretierbar ist.

Vorzugsweise ist das Halteelement ein mit dem elastischen Element fest verbundener, sich radial wegerstreckender, im Querschnitt runder oder rechteckiger Stift. Besonders bevorzugt ist der Stift einstückig an das elastische Element angeformt.

Vorzugsweise ist im Arretierungselement eine Aussparung zum Durchstecken des Halteelements vorgesehen.

Gemäss einer bevorzugten Ausführung ist die Aussparung kleiner bemessen als die Dicke des Halteelements. Des Weiteren weist das Arretierungselement vorzugsweise jeweils zwischen der Aussparung und einer Längskante einen Ausschnitt auf. Die beiden Ausschnitte sind bevorzugt identisch und könnten sich insbesondere zentriert und zueinander parallel verlaufend jeweils in eine Längserstreckung des Metallplättchens erstrecken. Des Weiteren ist jeder Ausschnitt mit der Aussparung verbunden, so dass durch die Ausschnitte und die Aussparung zwei gegenüberliegende elastische Federelemente gebildet werden. Die Federelemente weisen jeweils ein an die Aussparung angrenzendes freies Ende mit vorteilhaft entsprechend der Aussparung halbrunder Stirnfläche auf. Dadurch werden die Stirnflächen beim Durchschieben des Halteelements nach hinten gebogen, so dass diese sperren und das Arretierungselement nicht mehr abgezogen werden kann. Selbstverständlich können die Federelemente auch analog hierzu mit in Breitenrichtung verlaufenden Ausschnitten an den Längsseiten angeordnet sein.

In einer bevorzugten Ausführung ist das Arretierungselement ein Plättchen, insbesondere ein rechteckiges Plättchen, z.B. aus Metall oder Kunststoff. Besonders bevorzugt ist das Plättchen konkav geformt.

Das Arretierungselement ist auf das Halteelement aufschiebbar aber nicht wieder ohne weiteres abziehbar. Im zusammengebauten Zustand ist das Arretierungselement bis an den Rand bzw. das elastische Element angrenzend auf das Halteelement aufgeschoben. Insbesondere ist das Arretierungselement in Form des Plättchens mit seiner konkaven Seite in Richtung des Behälters weisend aufgeschoben.

Eine erfindungsgemässe Bevorratungseinrichtung zum Aufnehmen, Vorhalten und insbesondere automatischen Bereitstellen eines erfindungsgemässen Behälters umfasst ein Gehäuse mit einem durch eine Wandung, einen Boden und einen Deckel gebildeten Gehäuseinnenraum, wobei in dem Innenraum ein oder mehrere Behälter aufgenommen oder aufnehmbar sind, und wobei die Wandung ein von aussen zugängliches Entnahmefach zur automatischen Bereitstellung eines der Behälter aufweist.

Das Gehäuse der Bevorratungseinrichtung kann eine beliebige, zur Aufnahme der Behälter geeignete Form aufweisen. In einer bevorzugten Ausführungsform weist die Bevorratungseinrichtung ein Gehäuse in Form eines Hohlzylinders auf, wobei der Hohlzylinder eine Wandung, einen Boden und einen Deckel aufweist, welche einen Zylinderinnenraum umgeben. Das Gehäuse kann aber beispielsweise auch als Hohlquader ausgebildet sein. Der oder die Behälter sind bevorzugt derart in der Bevorratungseinrichtung aufgenommen bzw. in dieser aufnehmbar, dass das elastische Element in seiner gefalteten Form ist, insbesondere die Form einer verdreht gefalteten Acht einnimmt. Der Platzbedarf der Behälter in der Bevorratungseinrichtung kann dadurch erheblich reduziert werden.

Vorzugsweise ist in der Wandung im Bereich des Deckels oder des Bodens, vorzugsweise des Deckels, eine zum Deckel koplanar sich erstreckende erste Aussparung vorgesehen, wobei die erste Aussparung dem Entnahmefach zugeordnet ist bzw. das Entnahmefach der ersten Aussparung nachgeordnet ist. Durch die erste Aussparung ist ein in der Bevorratungseinrichtung befindlicher Behälter aus dem Entnahmefach entnehmbar.

Vorzugsweise ist in der Wandung des Weiteren eine von der ersten Aussparung sich senkrecht, insbesondere in Richtung des Bodens, wegerstreckende zweite Aussparung vorgesehen. Die zweite Aussparung ist derart bemessen, dass die Halteelemente von in der Bevorratungseinrichtung befindlichen Behältern über die Wandung hinausragen und in der zweiten Aussparung führbar sind.

Vorzugsweise ist die zweite Aussparung mittels einer von der Wandung vorspringenden, schachtartigen Abdeckung eingehaust. Die Abdeckung ist bevorzugt im Querschnitt u-förmig und derart über der zweiten Aussparung angeordnet, dass die Halteelemente, insbesondere Haltestifte, von in der Bevorratungseinrichtung befindlicher Behälter innerhalb eines von der Abdeckung gebildeten Schachts verschieblich angeordnet sind. Bevorzugt ist die Abdeckung derart ausgebildet, dass nur ein im Entnahmefach angeordnetes Halteelement von aussen zugänglich ist.

Vorzugsweise umfasst die Bevorratungseinrichtung eine bevorzugt im Innenraum im Bereich des Bodens vorgesehene Nachladeeinrichtung. Mittels der Nachladeeinrichtung sind im Innenraum befindliche Behälter automatisch in Richtung des Entnahmefachs beförderbar. Dadurch ist im Entnahmefach stets ein Behälter bereitstellbar.

Besonders bevorzugt weist die Nachladeeinrichtung eine sich parallel zum Boden erstreckende, scheibenförmige Druckplatte und ein zwischen der Druckplatte und dem Boden angeordnetes, an einer Innenseite des Bodens gelagertes Antriebseinrichtung, insbesondere eine Springfeder oder Druckfeder oder hydraulische Einrichtung auf. Mittels der Antriebseinrichtung ist die Druckplatte in Richtung des Deckels antreibbar bewegbar, so dass der oberste sich im Innenraum befindliche Behälter automatisch in das Entnahmefach beförderbar ist. Zudem ist auf diese Weise der im Entnahmefach befindliche Behälter derart im Entnahmefach halterbar, dass dieser leicht entnehmbar ist aber von selbst nicht herausrutschen kann.

Vorzugsweise ist auf dem Deckel der Bevorratungseinrichtung ein Mittel zur Befestigung bzw. Halterung bzw. Kopplung der Bevorratungseinrichtung an einer dieser zuordenbaren Vorrichtung, insbesondere einer erfindungsgemässen Vorrichtung zur Aufnahme von Exkrementen, ausgebildet. Hierbei handelt es sich z.B. um einen Bajonettverschluss oder Einrastverschluss oder dergleichen Befestigungsmittel. Die Bevorratungseinrichtung kann alternativ auch via ihre Wandung oder ihren Boden an der Vorrichtung zur Aufnahme von Exkrementen befestigbar sein. Bevorzugt ist die Bevorratungseinrichtung somit lösbar an der Vorrichtung zur Aufnahme von Exkrementen anbringbar.

Eine erfindungsgemässe Vorrichtung zur Aufnahme und Handhabung von Exkrementen, insbesondere in einem erfindungsgemässen Behälter umfasst eine Bevorratungseinrichtung zum Bereitstellen des Behälters, eine aus- und einfahrbare Rohranordnung, eine Behälterentnahmeeinrichtung zur automatisierten Entnahme des Behälters aus der Bevorratungseinrichtung und Beförderung des Behälters in eine Behälterhalterungseinrichtung sowie die Behälterhalterungseinrichtung zum Haltern des Behälters an einer Stirnwandung der Rohranordnung und Zuziehen des Behälters.

Vorzugsweise weist die Rohranordnung mehrere miteinander verbundene, in eine Ausziehrichtung aus einem Vorrichtungsgehäuse aus- und wieder einfahrbare Rohrsegmente auf, wobei das in Ausziehrichtung gesehen vorderste Rohrsegment eine Stirnwandung, eine sich von der Stirnwandung entgegen der Ausziehrichtung bis zu einem verjüngten Bereich konisch verjüngende Rohrinnenfläche, und an seiner Unterseite im Bereich der konischen Rohrinnenfläche eine Aussparung aufweist.

Vorzugsweise umfasst die Behälterhalterungseinrichtung ein Klemmelement mit Greifmitteln und einen Seilzugmechanismus mit einem Zugseil und Mitteln zur Betätigung des Zugseils, wobei das Klemmelement und das Zugseil innerhalb der Rohranordnung hin- und herverschieblich angeordnet sind zwischen einer Aufnahmestellung, in der sich das Greifmittel im Bereich der konischen Rohrinnenfläche befindet, wobei ein Klemmbereich mit der Aussparung im Rohr fluchtet, und einer klemmenden Stellung, in der das Greifmittel den Haltestift klemmend in einen hinteren Bereich des Rohrs verfahren ist.

Vorzugsweise umfasst die Behälterentnahmeeinrichtung zumindest einen, vorzugsweise zwei parallele, um eine Schwenkachse in eine Schwenkrichtung hin- und herschwenkbare Entnahmearme, die an einem der Schwenkachse abgewandten, freien Ende jeweils einen Magnet aufweisen, wobei die Behälterentnahmeeinrichtung auf die Position des Entnahmefachs, und auf die Stirnwandung des Rohrsegments abgestimmt ist, so dass die Entnahmearme zwischen einer Entnahmestellung, in der der Entnahmearm jeweils mit dem Magnet an dem Arretierungselement des im Entnahmefach bereitstellbaren Behälters anliegt, wobei das Halteelement ein Durchgangsloch des Magneten durchgreift, und einer Halterungsstellung, in der das Halteelement von unten in die konische Rohrinnenfläche in den Klemmbereich des Greifmittels einführbar ist, verschwenkbar sind.

Vorzugsweise sind die Segmente der Rohranordnung, die Behälterentnahmeeinrichtung und die Behälterhalterungseinrichtung jeweils automatisiert, insbesondere elektrisch, betreibbar. Vorzugsweise ist hierzu eine Stromversorgung vorgesehen, z.B. ein Akku oder eine Batterie. Besonders bevorzugt ist ein Mittel zur Energierückgewinnung vorgesehen, mittels dem der Akku wieder aufladbar ist, z.B. beim Abrollen einer der Vorrichtung zugeordneten Hundeleine.

Gemäss einer weiteren Ausführungsform der Erfindung ist in das Gehäuse der Vorrichtung eine so genannte Roll-Hundeleine, d.h. eine automatisch abrollbare, bzw. zum Abrollen freigebbare, und wieder aufrollbare Hundeleine, vorgesehen. Derartige Roll-Hundeleinen sind an sich bekannt und können in den bekannten Ausführungen mit der erfindungsgemässen Vorrichtung in einem gemeinsamen Gehäuse kombiniert werden. Alternativ kann am Gehäuse der Vorrichtung auch eine Einrichtung, z.B. ein Metallring oder ein Karabiner, zum Befestigen einer herkömmlichen Leine, wie einer Lederleine oder Schleppleine oder Kurzführleine, vorgesehen sein.

Es kann aber auch eine Roll-Hundeleine bereitgestellt werden, in deren Gehäuse die erfindungsgemässe Vorrichtung integriert ist.

Vorteil der erfindungsgemässen Vorrichtung ist somit die berührlose Aufnahme, Handhabung und Beseitigung des Behälters und damit der Exkremente. Weitere Vorteile sind, dass die Vorrichtung einhändig bedienbar ist, so dass die Hundeleine während des Auffangens der Exkremente nicht weggelegt werden muss. Ausserdem ist die Vorrichtung kompakt und einfach herstellbar sowie einfach zu bedienen. Des Weiteren ist durch die Mehrzahl vorgehaltener Behälter und deren automatischer Bereitstellung die Vorrichtung flexibel einsetzbar. Es muss nicht manuell Nachgeladen werden oder gar eine Reinigung durchgeführt werden. Nach dem Aufbrauchen aller in der Bevorratungseinrichtung vorgehaltenen Behälter kann die nun leere Bevorratungsvorrichtung aufgrund ihrer bevorzugt lösbaren Anbringung bequem mit einer neuen, mit Behältern gefüllten Bevorratungsvorrichtung ausgetauscht werden.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1a: eine schematische Draufsicht auf einen erfindungsgemässen Behälter;
- Fig. 1b: eine schematische Ansicht einer Halteeinrichtung eines erfindungsgemässen Behälters;
- Fig. 1c: eine schematische, perspektivische Ansicht eines erfindungsgemässen Behälters während der Montage der Halteeinrichtung;
- Fig. 2a: eine schematische, perspektivische Ansicht einer erfindungsgemässen Bevorratungseinrichtung;
- Fig. 2b: eine schematische Schnittdarstellung einer erfindungsgemässen Bevorratungseinrichtung mit erfindungsgemässen Behältern;
- Fig. 2c: eine Frontansicht der Bevorratungseinrichtung gemäss Fig. 2a;
- Fig. 3: eine schematische Seitenansicht einer erfindungsgemässen Vorrichtung in Teilansicht auf Teleskoparm in eingefahrener Position;
- Fig. 4: eine schematische, perspektivische Ansicht einer erfindungsgemässen Vorrichtung in vergrösserter Teilansicht auf Bevorratungseinrichtung und an einem Behälter anliegende Schwenkarme;
- Fig. 5: eine schematische Seitenansicht einer erfindungsgemässen Vorrichtung in Teilansicht auf Teleskopann in ausgefahrener Position;
- Fig. 6: eine schematische, geschnittene Draufsicht auf den Endbereich des Teleskoparms mit Klemmelement in ausgefahrener Position;
- Fig. 7: eine schematische, geschnittene Draufsicht auf den Endbereich des Teleskoparms mit Schwenkmechanismus;
- Fig. 8: eine schematische, geschnittene Seitenansicht des Endbereichs des Teleskoparms mit Schwenkmechanismus;
- Fig. 9: eine schematische, geschnittene Draufsicht auf den Endbereich des Teleskoparms mit Klemmelement in eingezogener Position;
- Fig. 10: eine schematische Seitenansicht einer erfindungsgemässen Vorrichtung zur Aufnahme von Exkrementen, im ausgefahrenen Zustand;
- Fig. 11: eine schematische Schnittansicht durch das Gehäuse der Vorrichtung;
- Fig. 12: eine schematische Seitenansicht der Vorrichtung zur Aufnahme von Exkrementen, im eingefahrenen Zustand und mit daran angebrachter Bevorratungsvorrichtung; sowie
- Fig. 13: eine schematische Seitenansicht der Vorrichtung zur Aufnahme von Exkrementen, im eingefahrenen Zustand und mit davon entfernter Bevorratungsvorrichtung.

### BESCHREIBUNG BEVORZUGTER AUSFÜHRUNGSFORMEN

In den verschiedenen Figuren der Zeichnung sind gleiche Teile stets mit denselben Bezugszeichen versehen.

Zu der anschliessenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

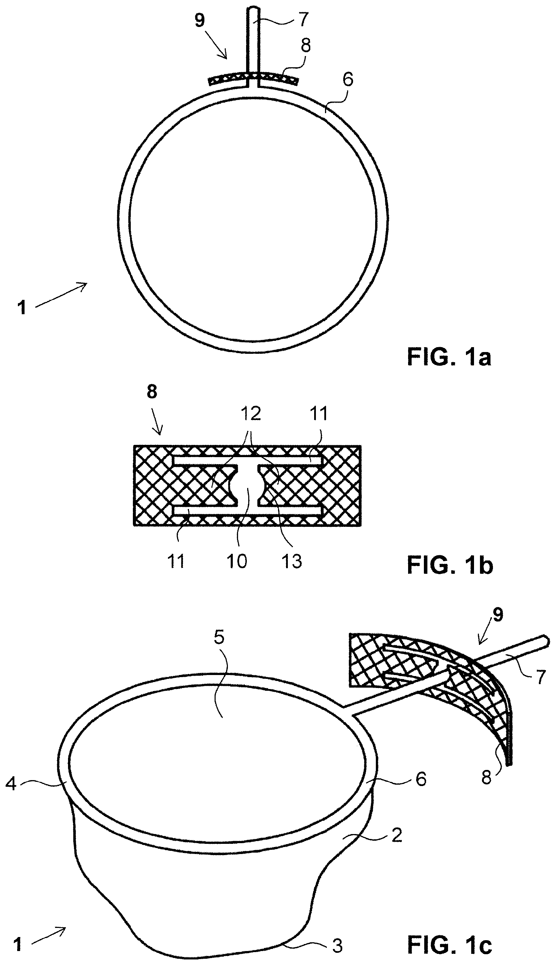

Fig. 1a zeigt ein Ausführungsbeispiel eines erfindungsgemässen Behälters 1 zur Aufnahme von Exkrementen. In Fig. 1b ist ein Ausführungsbeispiel einer Halteeinrichtung 7 des in Fig. 1a dargestellten Behälters 1 gezeigt. Fig. 1c zeigt den Behälter 1 während der Montage der Halteeinrichtung 7.

Der Behälter 1 zur Aufnahme und Beseitigung von Exkrementen weist eine Behälterwandung 2 mit einem Boden 3 und einem Rand 4 auf. Im dargestellten Ausführungsbeispiel ist die Behälterwandung 2 aus einem Plastiksäckchen gebildet. Der Rand 4 bildet bzw. umschliesst eine dem Boden 3 gegenüberliegende Aufnahmeöffnung 5. Der Behälter 1 weist des Weiteren ein elastisches Element in Form eines elastischen Rings 6, ein sich vom elastischen Ring 6 in radialer Richtung wegerstreckendes Halteelement 7 und ein am Halteelement vorgesehenes Arretierungselement 8 auf. Halteelement 7 und Arretierungselement 8 bilden eine Einrichtung 9 zum Schliessen der Aufnahmeöffnung 5. Die Einrichtung 9 bildet ein Teil des Behälters 1.

Der elastische Ring 6 ist aus Kunststoff. Er könnte grundsätzlich aber auch aus einem beliebigen anderen Material, wie insbesondere einem Metall, hergestellt sein. Der elastische Ring 6 ist zum Beispiel mittels eines durch Umschlagen des Rands 4 gebildeten Schlaufenkanals am Rand 4 befestigt und kann innerhalb des Schlaufenkanals frei verschieblich angeordnet sein.

Das Halteelement 7 ist als ein vorzugsweise einstückig an den elastischen Ring 6 angeformter Stift 7 ausgebildet, welcher radial vom elastischen Ring 6 absteht und aus dem Rand 4 herausragt.

Das Arretierungselement 8 ist ein rechteckiges, konkav geformtes Plättchen, vorzugsweise Metallplättchen 8. Der Radius der Konkavität ist angepasst an den Radius des elastischen Rings.

Das Metallplättchen 8 weist mittig eine kreisförmige Aussparung 10 auf. Des Weiteren weist das Metallplättchen 8 jeweils zwischen der Aussparung 10 und einer Längskante einen Ausschnitt 11 auf. Die beiden Ausschnitte 11 sind identisch und erstrecken sich zentriert und zueinander parallel verlaufend jeweils in eine Längserstreckung des Metallplättchens 8. Des Weiteren ist jeder Ausschnitt 11 mit der Aussparung 10 verbunden, so dass durch die Ausschnitte 11 und die Aussparung 10 zwei gegenüberliegende elastische Federelemente 12 gebildet werden. Die Federelemente 12 weisen jeweils ein an die Aussparung 10 angrenzendes freies Ende mit entsprechend der Aussparung halbrunder Stirnfläche 13 auf.

Das Metallplättchen 8 ist mit seiner Konkaven in Richtung des Behälters 1 weisend mittels der Aussparung 10 vollständig auf den Stift 7 aufgeschoben (siehe Fig. la). Der Stift 7 ist dabei zwischen den Federelementen 12 eingeklemmt. Das Metallplättchen 8 ist dadurch fest am Behälter 1 angebracht.

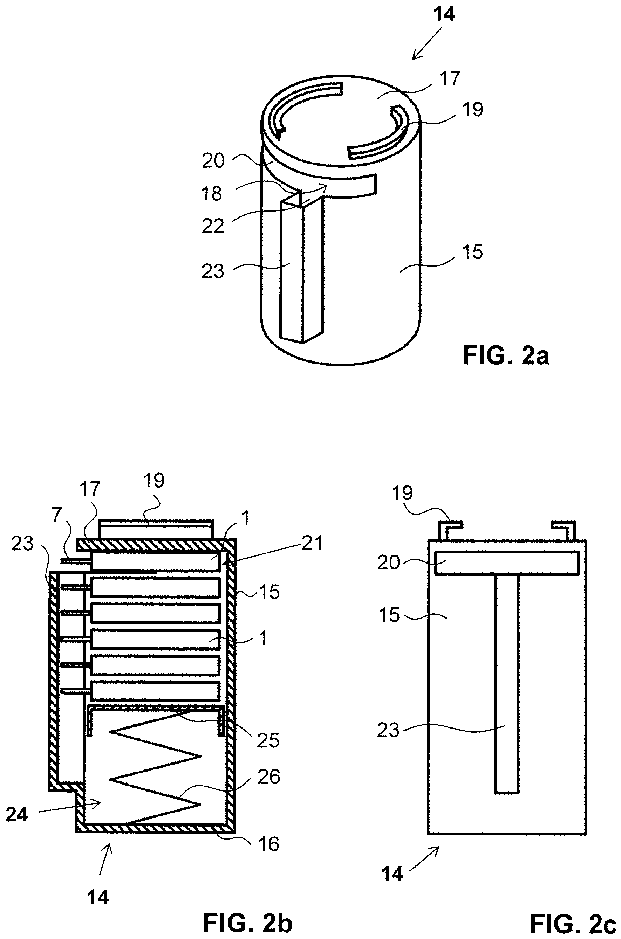

Fig. 2a-c zeigen jeweils in verschiedenen Ansichten ein Ausführungsbeispiel einer erfindungsgemässen Bevorratungseinrichtung 14 zum Aufnehmen, Vorhalten und insbesondere automatischen Bereitstellen eines oder mehrerer der in Fig. 1a gezeigten Behälter 1.

Die gezeigte Bevorratungseinrichtung 14 hat die Form eines Hohlzylinders, aufweisend eine Wandung 15, einen Boden 16 und einen Deckel 17, welche einen Zylinderinnenraum 18 umgeben.

Der Zylinderinnenraum 18 ist so bemessen, dass mehrere Behälter 1 übereinander angeordnet aufnehmbar sind. Insbesondere ist der Zylinderinnenraum 18 an einen Durchmesser der Behälter 1, also an einen Durchmesser des elastischen Rings 6 bzw. des Rands 4, angepasst. Beim erwähnten Durchmesser des elastischen Rings 6 kann es sich insbesondere und vorteilhaft um den Aussendurchmesser des elastischen Rings 6 in einer gefalteten Form, beispielsweise die Form einer verdreht gefalteten Acht, handeln.

Auf dem Deckel 17 ist ein Bajonettverschluss 19 zur Befestigung bzw. Halterung der Bevorratungseinrichtung 14 an einer erfindungsgemässen Vorrichtung 27 zur Aufnahme von Exkrementen vorgesehen.

Die Wandung 15 weist im Bereich des Deckels 17 eine parallel zum Deckel 17 verlaufende erste Aussparung 20 mit nachgelagertem Entnahmefach 21 auf. Die Abmessungen der ersten Aussparung 20 sind angepasst zum Entnehmen eines Behälters 1 durch die Aussparung 20 hindurch.

Die Wandung 15 weist des Weiteren eine von der ersten Aussparung 20 sich senkrecht in Richtung Boden 16 erstreckende zweite Aussparung 22 auf. Die zweite Aussparung 22 weist eine Breite auf, die angepasst ist zur Aufnahme der Haltestifte 7. Aus der zweiten Aussparung 22 ragen die Haltestifte 7 von in der Bevorratungseinrichtung 14 aufgenommenen Behältern 1 über die Wandung 15 heraus. Über der zweiten Aussparung 22 ist eine Abdeckung 23 an die Wandung 15 angeformt, so dass nur der oberste, deckelseitig angeordnete Behälter 1 von aussen zugänglich ist. Die zweite Aussparung 22 und die Abdeckung 23 bilden somit eine Ausbuchtung.

In dem Entnahmefach 21 ist der entnehmbare Behälter 1 bereitgestellt. Um dies zu bewerkstelligen, ist im Innenraum 18 eine Nachladeeinrichtung 24 vorgesehen.

Die Nachladeeinrichtung 24 ist ausgebildet zum Verschieben eines Behälters 1 mit zugehörigem Metallplättchen 8 in das Entnahmefach 21. Im vorliegenden Ausführungsbeispiel weist die Nachladeeinrichtung 24 hierfür eine sich parallel zum Boden 16 erstreckende, scheibenförmige Druckplatte 25 und eine zwischen der Druckplatte 25 und dem Boden 16 angeordnete, sich an einer Innenseite des Bodens 16 abstützende Druckfeder 26 auf. Mittels der Druckfeder 26 wird die Druckplatte 25 in Richtung des Deckels 17 angetrieben, so dass der oberste sich im Innenraum 18 befindliche Behälter 1 in das Entnahmefach 21 befördert und dort vorgehalten wird.

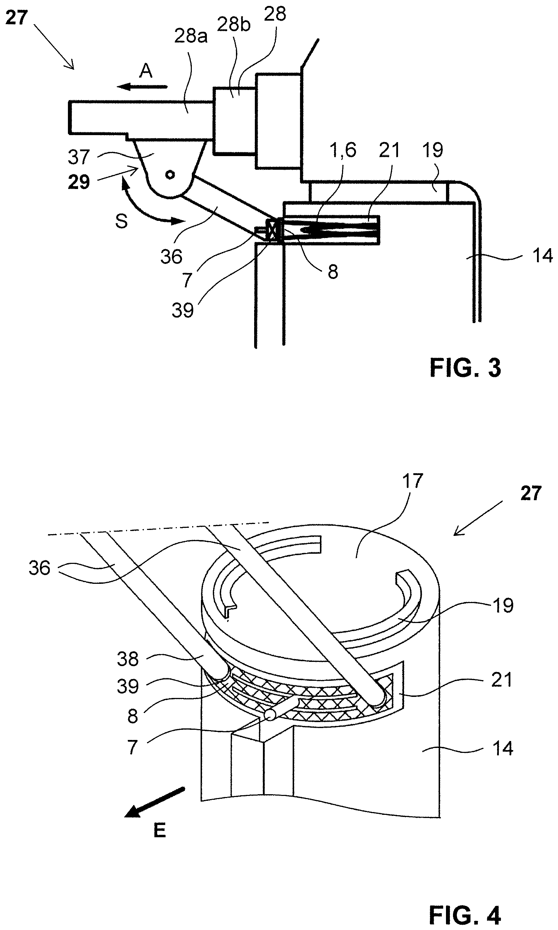

Fig. 3 bis 9 zeigen Teilansichten verschiedener Merkmale eines Ausführungsbeispiels einer erfindungsgemässen Vorrichtung 27 zur Aufnahme und Handhabung von Exkrementen, insbesondere in dem erfindungsgemässen Behälter 1 gemäss Fig. 1a)-c) aus der erfindungsgemässen Bevorratungseinrichtung 14 gemäss Fig. 2a)-c).

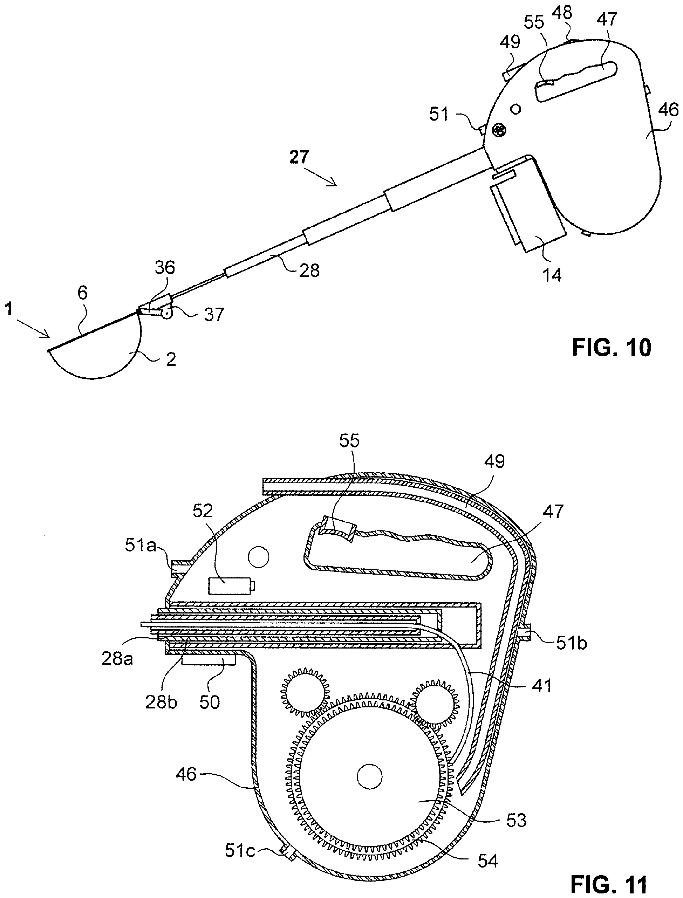

Die Vorrichtung 27 weist ein Teleskoprohr 28, eine Behälterentnahmeeinrichtung 29 und eine Behälterhalterungseinrichtung 30, welche in einem Gehäuse (nicht dargestellt) angeordnet sind, auf. Die Vorrichtung 27 weist zudem den entsprechenden Gegenteil 50 (siehe Fig. 11) des Bajonettverschlusses 19 der Bevorratungseinrichtung 14 auf zum Befestigen der Bevorratungseinrichtung 14. Dieser befindet sich vorzugsweise an einer Unterseite des Teleskoprohrs 28.

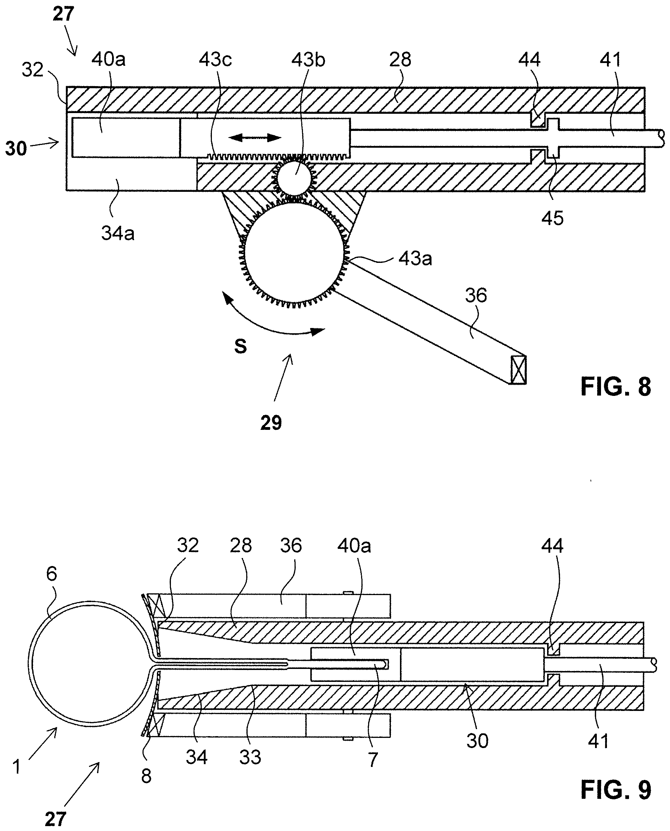

Das Teleskoprohr 28 weist mehrere miteinander verbundene in eine Ausziehrichtung A aus dem Gehäuse ausfahrbare und wieder einfahrbare Rohrsegmente 28a, 28b auf. Das Teleskoprohr 28 ist innen hohl und die einzelnen Rohrsegmente 28a,b bilden einen gemeinsamen Rohrinnenraum 31. Das in Ausziehrichtung A gesehen vorderste Rohrsegment 28a weist eine Stirnwandung 32, eine sich von der Stirnwandung 32 entgegen der Ausziehrichtung A bis zu einem verjüngten Bereich 33 konisch verjüngende Rohrinnenfläche 34, wobei der Innendurchmesser des Rohrs 28a an der Stirnfläche grösser ist als der am verjüngten Bereich 33, sowie einen dem verjüngten Bereich 33 nachgeordneten radialen Vorsprung 44 auf. Des Weiteren weist das Teleskoprohr 28a an seiner Unterseite im Bereich der konischen Rohrinnenfläche 34 eine Aussparung 34a (Fig. 8) zur Aufnahme des Haltestifts 7 auf. Des Weiteren ist das Teleskoprohr mittels eines Auslösemechanismus ausfahrbar, z.B. elektrisch angetrieben oder durch eine Feder.

Die Behälterentnahmeeinrichtung 29 weist zwei parallele, an einem Schwenkrad 43a mit Zahnantrieb befestigte, um eine Schwenkachse 35 in eine Schwenkrichtung S hin- und herschwenkbare Entnahmearme 36 auf. Diese sind mittels einer Lagerung 37, an der das Schwenkrad 43a sowie ein Umlenkzahnrad 43b gelagert sind, an der Unterseite des Teleskoprohrs 28 befestigt. Das Schwenkrad 43a bzw. die Entnahmearme 36 ist bzw. sind mittels eines Auslösemechanismus antreibbar, z.B. elektrisch oder durch eine Auslösefeder.

Die Entnahmearme 36 weisen ein freies Ende 38 auf. An dem freien Ende ist jeweils ein Magnet 39 angebracht.

Die Behälterhalterungseinrichtung 30 weist ein Klemmelement 40 mit einem Greifer 40a und einem Zahnantrieb 43c, einen Seilzugmechanismus mit einem Zugseil 41 und Mitteln zur Betätigung (nicht dargestellt) des Zugseils 41 auf. Das Klemmelement 40 und das Zugseil 41 sind innerhalb des Teleskoprohrs 28 angeordnet. Die Mittel zur Betätigung des Zugseils 41 umfassen ein ausserhalb des Gehäuses angeordnetes Griffelement. Am Zugseil 41 ist auf einer dem Klemmelement 40 abgewandten Seite des am Teleskoprohr 28 vorgesehenen Vorsprungs 44 zudem ein Anschlagelement 45 in Form einer Anschlagscheibe befestigt, welches dazu dient, dass das Klemmelement nicht aus dem Teleskoprohr 28 herausgezogen werden kann. Anstelle einer Anschlagscheibe kann zum Beispiel auch ein einfacher, im Zugseil 41 vorgesehener Knopf das Anschlagelement 45 bilden.

Der Greifer 40a ist innerhalb des Rohrsegments 28a hin- und herverschieblich angeordnet zwischen einer Aufnahmestellung und einer klemmenden Stellung. In der Aufnahmestellung befindet sich der Greifer 40a im Bereich der konischen Rohrinnenfläche 34, wobei ein Klemmbereich 42 mit der Aussparung 34 im Rohr fluchtet.

Die Behälterentnahmeeinrichtung 29 ist auf die Position der Bevorratungseinrichtung 14, insbesondere auf die Position des Entnahmefachs 21, und auf die Stirnwandung 32 des Rohrsegments 28a abgestimmt, so dass die Entnahmearme 36 zwischen einer Entnahmestellung und einer Halterungsstellung verschwenkbar sind.

In der Entnahmestellung liegen die Entnahmearme 36 jeweils mit dem Magnet 39 an dem Metallplättchen 8 des im Entnahmefach 21 bereitgestellten Behälters 1 an, so dass der im Entnahmefach 21 federnd vorgehaltene Behälter 1 durch die Magnet-Metallplättchen-Verbindung von den Entnahmearmen 36 festgehalten wird. Wie erläutert ist das Metallplättchen 8 dabei bis an den Rand 4 auf den Haltestift 7 aufgeschoben und an diesem arretiert. Durch Verschwenken der Entnahmearme 36 ist der so kontaktierte und am Magnet 39 befestigte Behälter 1 in eine Entnahmerichtung E aus dem Entnahmefach 21 herausziehbar und in die Halterungsstellung bringbar. Beim Verschwenken in die Halterungsstellung ist der Haltestift 7 von unten in die konische Rohrinnenfläche 34 und somit zwischen die mit dieser fluchtend ausgerichteten Greifer 40a einführbar. Der Behälter 1 wird aber vorerst nur über die Magnete 39 gehalten.

Durch Zurückziehen des Zugseils 41 ist der Greifer 40a in den hinteren Bereich des Rohrs 28a verfahrbar, wobei der Greifer 40a den verjüngten Bereich 33 passiert und dadurch die Greifbacken um den Haltestift 7 geschlossen werden und dieser geklemmt bzw. an der Stirnwandung 32 halterbar ist. Die Rückstellung der Entnahmearme 36 erfolgt gleichzeitig über das Zahnrad 43b und den Zahnantrieb 43c.

In dieser Stellung kann der Behälter 1 mittels des Teleskoprohrs 28 hinter einen Hund gehalten werden, während dieser Kot absetzt, um den Kot mit dem Behälter 1 aufzufangen noch bevor der Kot den Boden berührt.

Durch Ziehen am Zugseil 41 ist der Greifer 40a noch weiter in den hinteren Bereich des Rohrs 28a verfahrbar, bis das Klemmelement 40 am Vorsprung 44 anschlägt. Dabei wird das elastische Element 6 durch das an der Stirnwandung 32 anliegende Metallplättchen 8 hindurch aus dem Rand 4 herausgezogen, wobei sich die Aufnahmeöffnung 5 immer weiter zuzieht. Während des Zuziehens wird mittels der Federelemente 12 das elastische Element 6 gleichzeitig relativ zum Rand 4 arretiert.

Das Teleskoprohr 28 hat im vollständig ausgefahrenen Zustand bevorzugt eine Gesamtlänge von 500 bis 1000 mm, bevorzugter von 600 bis 800 mm, insbesondere von ca. 730 mm. Dadurch ist die Vorrichtung 27 von den meisten Hundehaltern bequem handhabbar. Der Durchmesser des Randes 4 des ausgefaltenen Behälters 1 liegt bevorzugt im Bereich von 120 bis 160 mm, insbesondere bei ca. 140 mm. Das Metallplättchen 8 hat vorteilhaft eine entlang der Ausschnitte 11 gemessene Länge von ca. 40 mm.

Die Figs. 10 bis 13 zeigen eine mögliche Ausführungsform einer Roll-Hundeleine mit einer erfindungsgemässen Vorrichtung 27 zur Aufnahme und Handhabung von Exkrementen. Die Roll-Hundeleine weist ein Gehäuse 46 auf, in welchem die Vorrichtung 27 zur Aufnahme und Handhabung von Exkrementen integriert ist. Das Gehäuse 46 weist einen daran angeformten Handgriff 47 in Form einer Durchgangsöffnung auf. Innerhalb dieser Durchgangsöffnung, also im Bereich des Handgriffs 47, ist ein Schalter 48 angeordnet zur Betätigung des Mechanismus' zum Aus- und Einfahren des Teleskoprohrs 28. Das Teleskoprohr 28 kann durch den Benutzer mittels Betätigung des Schalters 48 somit aus- und eingefahren werden.

Wie nachfolgend erklärt wird, wird beim Ausfahren des Teleskoprohrs 28 automatisch ein Behälter 1 aus der Bevorratungseinrichtung 14 gezogen, aufgefaltet und mittels der Entnahmearme 36 nach vorne in die in der Fig. 10 gezeigte Bereitschaftsstellung gebracht. Beim Einfahren des Teleskoprohrs 28 wird die Aufnahmeöffnung 5 des Behälters 1 automatisch zugezogen, indem die Greifer 40a der Behälterhalterungseinrichtung 30 das Haltemittel 7 erfassen und zurückziehen, und gleichzeitig werden die Entnahmearme 36 der Behälterentnahmeeinrichtung 29 zurück in die Entnahmestellung gebracht. Die gesamte Funktion des Teleskoprohrs 28, der Behälterentnahmeeinrichtung 29 und der Behälterhalterungseinrichtung 30 ist somit mittels eines einzigen Schalters 48 kontrollier- und bedienbar.

Der Antrieb zum Ein- und Ausfahren des Teleskoprohrs 28 und somit auch zum Steuern der Behälterentnahmeeinrichtung 29 und der Behälterhalterungseinrichtung 30 ist in der Fig. 11 gezeigt. Er weist insbesondere eine Zugseiltrommel 54 auf, welche mittels eines in der Figur nicht dargestellten Elektromotors antreibbar ist. Die Drehrichtung des Elektromotors und somit der Zugseiltrommel 54 ist mittels des Schalters 48 steuerbar. Die Zugseiltrommel 54 dient dabei zum Auf- und Entrollen des Zugseils 41, welches sich, wie in der Fig. 11 dargestellt, im gehäuseseitigen Endbereich des Teleskoprohrs 28 aus diesem hinaus erstreckt und von dort zur Zugseiltrommel 54 geführt und auf diese aufgewickelt ist.

Das Zugseil 41 ist in der hier gezeigten Ausführungsform als ein kombiniertes Zug- und Druckkabel ausgebildet, was bedeutet, dass mit dem Zugseil 41 nicht nur eine Zugkraft entgegen die Ausziehrichtung A bewirkt werden kann, sondern auch eine Stosskraft entlang der Ausziehrichtung A. Das Zugseil 41 weist dementsprechend eine gewisse Steifigkeit auf.

Zum Ausfahren des Teleskoprohrs 28 wird das Zugseil 41 von der Zugseiltrommel 54 abgerollt, wodurch das daran angebrachte Anschlagelement 45 nach vorne hin am radialen Vorsprung 44 anschlägt und dadurch das vorderste Rohrsegment 28a nach vorne, das heisst vom Gehäuse 46 weg, bewegt. Zum Einfahren des Teleskoprohrs 28 wird das Zugseil auf die Zugseiltrommel 54 aufgerollt und dadurch in das Gehäuse 46 hineingezogen. Dadurch schlägt das Klemmelement 40 nach hinten am radialen Vorsprung 44 an und zieht entsprechend das vorderste Rohrsegment 28a nach hinten, das heisst in Richtung zum Gehäuse 46 hin.

Die Funktion der Behälterhalterungseinrichtung 30, das heisst das automatische Klemmen des Haltemittels 7 durch die Greifer 40a beim Zurückziehen des Zugseils 41, wurde bereits weiter oben beschrieben.

Die Wirkung des Zugseils 41 auf Behälterentnahmeeinrichtung 29 erfolgt, wie ebenfalls bereits weiter oben beschrieben, via den Zahnantrieb 43c, das Umlenkzahnrad 43b und das Schwenkrad 43a. In der Entnahmestellung, das heisst wenn das Teleskoprohr 28 und das Zugseil 41 ganz zum Gehäuse 46 hin zurückgezogen sind, verhindert der gegenseitige Eingriff des Zahnantriebs 43c, des Umlenkzahnrads 43b und des Schwenkrads 43a ein Umklappen der Entnahmearme 36 nach vorne hin entgegen eine Federkraft. Die Entnahmearme 36 sind nämlich in Richtung der Entnahmestellung mit einer Federkraft beaufschlagt. Bei der zugehörigen Feder, welche in den Figuren nicht gezeigt ist, kann es sich beispielsweise um eine einfache Schenkelfeder handeln. Wenn das Zugseil 41 zum Ausfahren des Teleskoprohrs 28 von der Zugseiltrommel 54 abgerollt wird, klappen die Entnahmearme 36 aufgrund der Federkraft automatisch nach vorne um. Der an den Magneten 39 via das Metallplättchen 8 angebrachte Behälter 1 wird dadurch aus der Bevorratungsvorrichtung 14 herausgezogen und entfaltet sich. Beim anschliessenden Zurückziehen des Zugseils 41 in das Gehäuse 46 hinein werden die Entnahmearme 36 aufgrund des gegenseitigen Eingriffs des Zahnantriebs 43c, des Umlenkzahnrads 43b und des Schwenkrads 43a wieder nach hinten in die Entnahmestellung geklappt, während die Greifer 40a den Behälter 1 festklemmen.

Das Umlenkzahnrad 43b weist vorteilhaft einen Freilauf auf, derart, dass der gegenseitige Eingriff des Zahnantriebs 43c, des Umlenkzahnrads 43b und des Schwenkrads 43a bei einer Bewegung des Zahnantriebs 43c relativ zum Schwenkrad 43a entgegen die Ausziehrichtung A (also beim Zurückziehen des Zugseils 41) wirksam ist und zu einem entsprechenden Umklappen der Entnahmearme 36 entgegen die Federkraft nach hinten hin führt. Bei einer Bewegung des Zahnantriebs 43c relativ zum Schwenkrad 43a entlang der Ausziehrichtung A (also beim Herausfahren des Zugseils 41 aus dem Gehäuse 46) ist der gegenseitige Eingriff des Zahnantriebs 43c, des Umlenkzahnrads 43b und des Schwenkrads 43a aufgrund des Freilaufs hingegen von Vorteil unwirksam. Die Entnahmearme 36 werden dann aufgrund der Federkraft automatisch nach vorne hin geklappt bzw. in ihrer Halterungsstellung gehalten.

Im Gehäuse 46 ist, wie in der Fig. 11 gezeigt, ausserdem eine Leinentrommel 53 angeordnet, welche nach bekannter Art mittels eines Einzugmechanismus' die in den Figuren nicht dargestellte Hundeleine einzieht bzw. bei einem gewissen Zug die Leine freigibt. Die Leinentrommel 53 ist bevorzugt vom Benutzer mittels einer Taste 55 bei Bedarf blockierbar, um ein weiteres Herausziehen der Leine durch den Hund zu verhindern. Um den Platz im Gehäuse 46 optimal auszunutzen, sind die Leinentrommel 53 und die Zugseiltrommel 54 bevorzugt, wie in der Fig. 11 gezeigt, konzentrisch nebeneinander angeordnet. Die Leine erstreckt sich im Gehäuse 46 durch eine Rollleinenführung 49 hindurch und ist oberhalb des Teleskoprohrs 28 nach aussen hin geführt.

Um den zum Antreiben der Zugseiltrommel 54 vorgesehenen Elektromotor mit elektrischer Leistung zu versorgen, ist im Gehäuse 46 zumindest ein Energiespeicher 52 vorhanden. Beim Energiespeicher 52 kann es sich um eine oder mehrere Batterien, insbesondere wiederaufladbare Batterien (Akkus) handeln. Gemäss einer Weiterbildung der Erfindung kann ein Mittel zur Energierückgewinnung, das heisst ein elektrischer Generator bzw. Dynamo, vorgesehen sein, um beim Herausziehen der Rollleine die Batterie(n) aufzuladen. Der elektrische Generator ist in der Fig. 11 in Form eines kleinen Zahnrades dargestellt, welches in eine an der Leinentrommel 53 vorgesehene Aussenverzahnung eingreift.

Das Gehäuse 46 der vorliegenden Ausführungsform weist Leuchten 51a, 51b und 51c auf. Die Leuchten 51a, 51b und 51c sind jeweils in Form einer im Gehäuse 46 vorgesehenen Aussparung gezeigt und weisen jeweils ein Leuchtmittel, z.B. in Form einer LED auf. Die Leuchte 51a weist nach vorne und dient zur Ausleuchtung des Weges. Die Leuchte 51c ist nach unten gerichtet, um das direkte Umfeld auszuleuchten. Die Leuchte 51b, welche bevorzugt ein rotes Licht ausstrahlt, dient zur Sicherheit des Hundehalters und ist nach hinten gerichtet. Die Leuchten 51a, 51b und 51c werden vorteilhaft über die Batterie 52 mit elektrischer Energie versorgt.

Des Weiteren kann am Gehäuse 46 eine Anzeigeleuchte vorgesehen sein, um anderen Hundeführern anzuzeigen, ob der Benutzer der Vorrichtung 27 Zeit hat, um den Hund mit einem anderen Hund spielen zu lassen, oder ob er es eilig hat und nicht gestört werden möchte. Die Anzeigeleuchte, welche in den Figuren nicht dargestellt ist, weist ein Leuchtmittel beispielsweise in Form einer LED auf. Die Anzeige kann insbesondere farblich erfolgen, wobei beispielsweise grün "ich habe Zeit, der Hund darf spielen" und rot "ich habe es eilig und möchte nicht gestört werden" bedeuten kann. Die Anzeigeleuchte kann ebenfalls über die Batterie 52 mit elektrischer Energie versorgt werden.

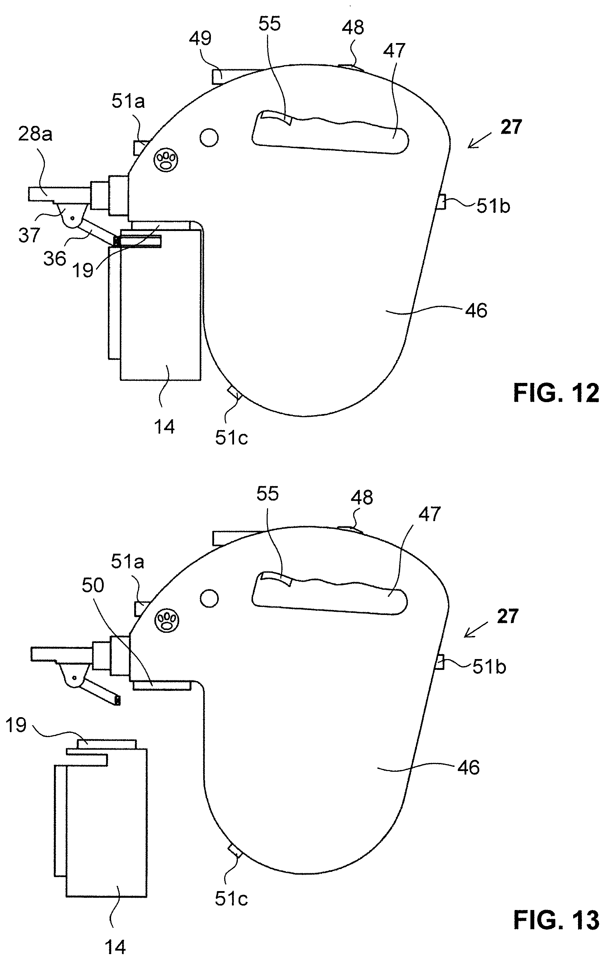

In den Figs. 12 und 13 ist die Vorrichtung 27 jeweils mit vollständig eingefahrenem Teleskoprohr 28 gezeigt. In der Fig. 12 ist eine mit Behältern 1 gefüllte Bevorratungseinrichtung 14 mittels des Bajonettverschlusses 19, 50 an der Vorrichtung 27 angebracht, welche somit einsatzbereit ist. In der Fig. 13 ist die Bevorratungseinrichtung 14 hingegen von der Vorrichtung 27 abgenommen, nachdem alle darin enthaltenen Behälter 1 benutzt worden sind. Die leere Bevorratungseinrichtung 14 kann nun mit einer neuen, gefüllten Bevorratungseinrichtung 14 ausgetauscht werden.

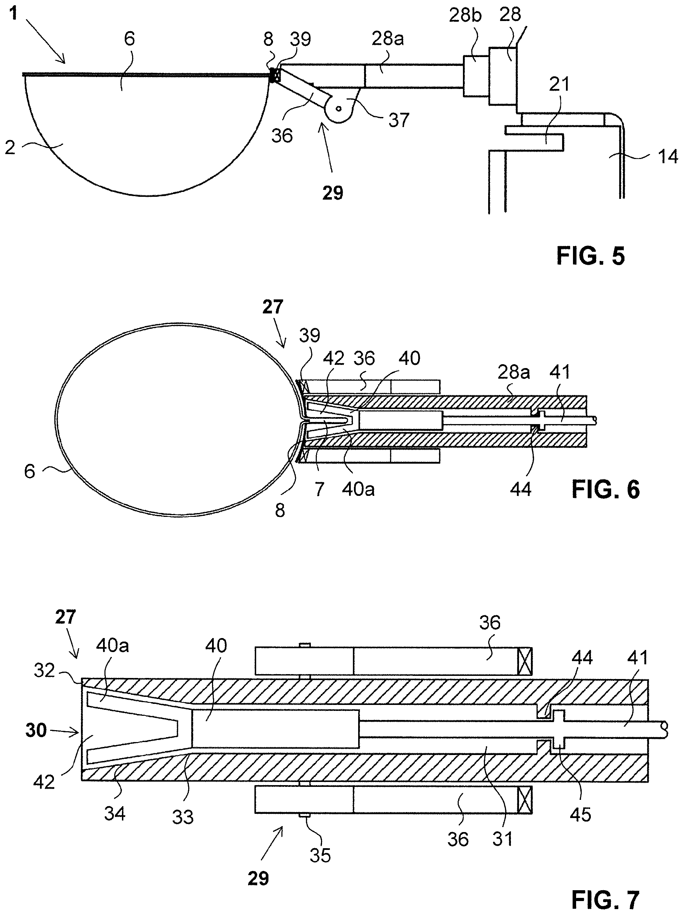

Im Folgenden wird die Funktionalität der erfindungsgemässen Vorrichtung 27 beispielhaft anhand der vorstehenden Ausführungsform beschrieben.
- In der Ausgangsposition stehen die Entnahmearme 36 in ihrer Entnahmestellung mit den Magneten 39 die Metallplatte 8 kontaktierend bereit, um den Behälter 1 aus dem Entnahmefach 21 zu entnehmen (Figs. 3 und 4);
- Beim Ausfahren des Teleskoprohrs 28 ziehen die Entnahmearme 36 den Behälter 1 mittels der Magnet-Metallplatten-Verbindung aus dem Entnahmefach 21 heraus;
- Dabei faltet sich der Behälter 1 und insbesondere dessen elastischer Ring 6 aus;
- Gleichzeitig werden die Greifer 40a in ihre Aufnahmestellung an der Stirnwandung 32 des Rohrs 28a verfahren und die Entnahmearme 36 werden um in Schwenkrichtung S verschwenkt und in ihre Halterungsposition an der Stirnwandung 32 des Rohrs 28a gebracht;
- Wenn der Behälter 1 vorne am Rohr 28a positioniert ist, befindet sich der Haltestift 7 zwischen den Greiferbacken des Greifers 40a (Fig. 6);
- Die Entnahmearme 36 werden in ihre Entnahmestellung zurückgeschwenkt, wodurch der Greifer 40a verfahren wird und den Haltestift festklemmt,
- Das Klemmelement 40 bzw. der Greifer 40a wird über das Zugseil 41 bedient und nach hinten gezogen, wodurch der Greifer 40a zusammengedrückt wird, wenn er den verjüngten Bereich 33 passiert;
- Dadurch wird der Haltestift 7 mitsamt dem elastischen Element 6, welches aus dem Rand 4 herausgezogen wird, in das Rohr 28 gezogen, wodurch die Aufnahmeöffnung 5 zusammengezogen wird (Fig. 9);
- Wenn das Zugseil 41 entspannt wird, fällt der Behälter 1 herunter und kann so entsorgt werden, ohne den Behälter 1 jemals berührt haben zu müssen.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die in den unabhängigen Ansprüchen jeweils definierte Merkmalskombination beschränkt, sondern kann auch durch jede beliebige andere Kombination von bestimmten Merkmalen aller insgesamt offenbarten Einzelmerkmale definiert sein. Das bedeutet, dass grundsätzlich jedes Einzelmerkmal des unabhängigen Anspruchs weggelassen bzw. durch mindestens ein an anderer Stelle der Anmeldung offenbartes Einzelmerkmal ersetzt werden kann.

**BEZUGSZEICHENLISTE**

| | | | |
|---|---|---|---|
| 1 | Behälter | 24 | Nachladeeinrichtung |
| 2 | Behälterwandung | 25 | Druckplatte |
| 3 | Boden | 26 | Druckfeder |
| 4 | Rand | 27 | Vorrichtung zur Aufnahme und Handhabung von Exkrementen |
| 5 | Aufnahmeöffnung | | |
| 6 | Elastischer Ring | | |
| 7 | Halteelement | 28 | Teleskoprohr |
| 8 | Metallplättchen | 28a | Rohrsegment |
| 9 | Einrichtung zum Schliessen der Aufnahmeöffnung | 28b | Rohrsegment |
| | | 29 | Behälterentnahmeeinrichtung |
| 10 | Aussparung | 30 | Behälterhalterungseinrichtung |
| 11 | Ausschnitt | | |
| 12 | Federelement | 31 | Rohrinnenraum |
| 13 | Stirnfläche | 32 | Stirnwandung |
| 14 | Bevorratungseinrichtung | 33 | Verjüngter Bereich |
| 15 | Wandung | 34 | Konisch verjüngende Rohrinnenfläche |
| 16 | Boden | | |
| 17 | Deckel | 34a | Aussparung |
| 18 | Zylinderinnenraum | 35 | Schwenkachse |
| 19 | Bajonettverschluss | 36 | Entnahmearm |
| 20 | Aussparung | 37 | Lagerung |
| 21 | Entnahmefach | 38 | Freies Ende |
| 22 | Aussparung | 39 | Magnet |
| 23 | Abdeckung | 40 | Klemmelement |
| 40a | Greifer | 50 | Bajonettverschluss |
| 41 | Zugseil | 51a | Leuchte |
| 42 | Klemmbereich | 51b | Leuchte |
| 43a | Schwenkrad | 51c | Leuchte |
| 43b | Umlenkzahnrad | 52 | Energiespeicher |
| 43c | Zahnantrieb | 53 | Leinentrommel |
| 44 | Radialer Vorsprung | 54 | Zugseiltrommel |
| 45 | Anschlagelement | 55 | Taste |
| 46 | Gehäuse | | |
| 47 | Handgriff | A | Ausziehrichtung |
| 48 | Schalter | S | Schwenkrichtung |
| 49 | Rollleinenführung | E | Entnahmerichtung |

## Patentansprüche

1. Behälter (1) zur Aufnahme und Beseitigung von Exkrementen, aufweisend eine beutelförmig ausgebildete Behälterwandung (2) mit einem Boden (3) und einem diesem gegenüberliegenden, eine Aufnahmeöffnung (5) des Behälters (1) bildenden Rand (4),
**gekennzeichnet durch**
ein am Rand (4) vorgesehenes, elastisches Element (6) zum Aufspannen der Aufnahmeöffnung (5) und zum Aussteifen des Rands (4), und
eine Einrichtung (9) zum Schliessen der Aufnahmeöffnung (5), wobei der Rand (4) durch Ziehen am elastischen Element (6) zuziehbar ist.

2. Behälter (1) nach Anspruch 1,
**dadurch gekennzeichnet, dass**
die Einrichtung (9) zum Schliessen der Aufnahmeöffnung (5) ein mit dem elastischen Element (6) verbundenes Halteelement (7), und ein am Halteelement (7) vorgesehenes Arretierungselement (8) aufweist, wobei an das Halteelement (7) eine in radialer Richtung vom elastischen Element (6) wegweisende Zugkraft (Z) derart anlegbar ist, dass das elastische Element (6) durch Ziehen am Halteelement (7) relativ zum Arretierungselement (8) vom Rand (4) wegbewegbar und dabei vom Arretierungselement (8) arretierbar ist.

3. Behälter (1) nach Anspruch 2,
**dadurch gekennzeichnet, dass**
das Halteelement (7) ein mit dem elastischen Element (6) fest verbundener, sich radial davon wegerstreckender Stift ist.

4. Behälter (1) nach Anspruch 2 oder 3,
**dadurch gekennzeichnet, dass**
das Arretierungselement (8) zwei sich gegenüberliegende elastische Federelemente (12) mit jeweils einer an einem freien Ende des Federelements angeordneter Stirnwandung (13) aufweist, wobei die Stirnwandungen (13) so ausgeformt sind, dass diese zusammen eine Aussparung (10) zum Durchstecken des Halteelements (7) bilden, wobei die Aussparung (10) so bemessen ist, dass die Stirnflächen (13) beim Aufschieben auf das Halteelement (7) dieses arretierend zurück gebogen werden.

5. Behälter (1) nach Anspruch 4,
**dadurch gekennzeichnet, dass**
im zusammengebauten Zustand des Behälters (1) das Arretierungselement (8) bis an den Rand (4) auf das Halteelement (7) aufgeschoben ist.

6. Bevorratungseinrichtung (14) zum Aufnehmen, Vorhalten und Bereitstellen eines Behälters zur Aufnahme von Exkrementen, insbesondere eines Behälters (1) nach einem der vorhergehenden Ansprüche,
**gekennzeichnet durch**
ein Gehäuse mit einem durch eine Wandung (15), einen Boden (16) und einen Deckel (17) gebildeten Gehäuseinnenraum (18), wobei in dem Innenraum ein oder mehrere Behälter (1) aufgenommen oder aufnehmbar sind, und wobei die Wandung (15) ein von aussen zugängliches Entnahmefach (21) zur automatischen Bereitstellung eines der Behälter (1) aufweist.

7. Bevorratungseinrichtung (14) nach Anspruch 6,
**dadurch gekennzeichnet, dass**
Die Wandung (15) eine parallel zum Deckel (17) verlaufende erste Aussparung (20) aufweist, die dem Entnahmefach (21) vorgelagert ist, und durch die der Behälter (1) aus dem Entnahmefach entnehmbar ist.

8. Bevorratungseinrichtung (14) nach Anspruch 7,
**dadurch gekennzeichnet, dass**
Die Wandung (15) eine von der ersten Aussparung (20) sich senkrecht wegerstreckende zweite Aussparung (22) aufweist, wobei in der zweiten Aussparung (22) jeweils ein Halteelement (7) im Innenraum befindlicher Behälter (1) führbar ist.

9. Bevorratungseinrichtung (14) nach Anspruch 8,
**dadurch gekennzeichnet, dass**
die Wandung (15) eine von der Wandung (15) vorspringende Abdeckung (23) aufweist, die derart über der zweiten Aussparung (22) angeordnet ist, dass nur das Halteelement (7) eines im Entnahmefach (21) angeordneten Behälters (1) von aussen zugänglich ist.

10. Bevorratungseinrichtung (14) nach einem der Ansprüche 6 bis 9,
**dadurch gekennzeichnet, dass**
die Bevorratungseinrichtung (14) eine Nachladeeinrichtung (24) aufweist, mittels der im Innenraum (18) befindliche Behälter (1) automatisch in Richtung des Entnahmefachs (21) beförderbar sind, so dass am Entnahmefach (21) stets einer der vorgehaltenen Behälter (1) bereitstellbar ist.

11. Vorrichtung (27) zur Aufnahme und Handhabung von Exkrementen, insbesondere in einem Behälter (1) nach einem der Ansprüche 1 bis 5,
**gekennzeichnet durch**
- eine Bevorratungseinrichtung (14), insbesondere nach einem der Ansprüche 6 bis 10, zum Bereitstellen eines Behälters (1),
- eine aus- und einfahrbare Rohranordnung (28),
- eine Behälterentnahmeeinrichtung (29) zur automatisierten Entnahme des Behälters (1) aus der Bevorratungseinrichtung (14) und Beförderung des Behälters (1) in eine Behälterhalterungseinrichtung (30),
- die Behälterhalterungseinrichtung (30) zum Haltern des Behälters (1) an einer Stirnwandung (32) der Rohranordnung (28) und Zuziehen des Behälters (1).

12. Vorrichtung (27) nach Anspruch 11,
**dadurch gekennzeichnet, dass**
die Rohranordnung (28) mehrere miteinander verbundene, in eine Ausziehrichtung A aus einem Vorrichtungsgehäuse aus- und wieder einfahrbare Rohrsegmente (28a, 28b) aufweist, wobei das in Ausziehrichtung A gesehen vorderste Rohrsegment (28a) eine Stirnwandung (32), eine sich von der Stirnwandung (32) entgegen der Ausziehrichtung A bis zu einem verjüngten Bereich (33) konisch verjüngende Rohrinnenfläche (34), und an seiner Unterseite im Bereich der konischen Rohrinnenfläche (34) eine Aussparung (34a) aufweist.

13. Vorrichtung (27) nach einem der Ansprüche 11 bis 12,
**dadurch gekennzeichnet, dass**
die Behälterhalterungseinrichtung (30) ein Klemmelement (40) mit Greifmitteln (40a) und einen Seilzugmechanismus mit einem Zugseil (41) und Mitteln zur Betätigung des Zugseils (41) aufweist, wobei das Klemmelement (40) und das Zugseil (41) innerhalb der Rohranordnung (28) hin- und herverschieblich angeordnet sind zwischen einer Aufnahmestellung, in der sich das Greifmittel (40a) im Bereich der konischen Rohrinnenfläche (34) befindet, wobei ein Klemmbereich (42) mit der Aussparung (34) im Rohr (28) fluchtet, und einer klemmenden Stellung, in der das Greifmittel (40a) den Haltestift (7) klemmend in einen hinteren Bereich des Rohrs (28a) verfahren ist.

14. Vorrichtung (27) nach Anspruch 13,
**dadurch gekennzeichnet, dass**
die Behälterentnahmeeinrichtung (29) zumindest einen, vorzugsweise zwei parallele, um eine Schwenkachse (35) in eine Schwenkrichtung (S) hin- und herschwenkbare Entnahmearme (36) aufweist, die an einem der Schwenkachse (35) abgewandten, freien Ende (38) jeweils ein Magnet (39) aufweisen, wobei die Behälterentnahmeeinrichtung (29) auf die Position des Entnahmefachs (21), und auf die Stirnwandung (32) des Rohrsegments (28a) abgestimmt ist, so dass die Entnahmearme (36) zwischen einer Entnahmestellung, in der der Entnahmearm (36) jeweils mit dem Magnet (39) an dem Arretierungselement (8) des im Entnahmefach (21) bereitstellbaren Behälters (1) anliegt, wobei das Halteelement (7) ein Durchgangsloch des Magneten (39) durchgreift, und einer Halterungsstellung, in der das Halteelement (7) von unten in die konische Rohrinnenfläche (34) in den Klemmbereich (42) des Greifmittels (40a) einführbar ist, verschwenkbar sind.

15. Roll-Hundeleine, aufweisend eine in einem Gehäuse installierte automatisch zum Abrollen freigebbare und wieder aufrollbare Hundeleine,
**dadurch gekennzeichnet, dass**
das Gehäuse eine Vorrichtung (27) nach einem der Ansprüche 11 - 14 aufweist.
